Europäisches Patentamt

European Patent Office

Office européen des brevets

(19)

(11) **EP 0 803 465 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.[7]: **B66C 15/00**, H02H 7/085, B66C 13/16, B66D 1/54, G07C 3/00

(21) Anmeldenummer: **97250125.8**

(22) Anmeldetag: **18.04.1997**

(54) **Einrichtung zur Erfassung der momentanen Belastung und/oder der Dauerbeanspruchung von Fördermitteln, insbesondere von Hubwerken**

Equipment for detecting the instantaneous load and/or the long duration stress state of handling means, in particular of lifting devices

Installation pour détecter la charge momentanée et/ou la sollicitation de longue durée de moyens de manipulation, en particulier de dispositifs de levage

(84) Benannte Vertragsstaaten:
**DE FR GB IT**

(30) Priorität: **19.04.1996 DE 19617105**

(43) Veröffentlichungstag der Anmeldung:
**29.10.1997 Patentblatt 1997/44**

(73) Patentinhaber: **Demag Cranes & Components GmbH**
**58300 Wetter (DE)**

(72) Erfinder:
• **Hülsmann, Michael, Dipl.-Ing.**
  **58313 Herdecke (DE)**
• **Münzebrock, Anton, Dipl.-Ing.**
  **44139 Dortmund (DE)**
• **Schröder, Eberhard, Dipl.-Ing.**
  **58553 Halver (DE)**

(74) Vertreter: **Moser & Götze**
**Patent Attorneys,**
**Rosastrasse 6A**
**45130 Essen (DE)**

(56) Entgegenhaltungen:
DE-A- 3 623 755        DE-A- 4 038 981
DE-B- 1 225 832        DE-U- 29 503 416
US-A- 4 953 053

**Beschreibung**

Die Erfindung betrifft eine Einrichtung zur Erfassung der momentanen Belastung und/oder der Dauerbeanspruchung von Fördermitteln, insbesondere von Hubwerken, die eine Lastmeßeinrichtung umfaßt und einen Elektromotor als Antriebsmittel für das Heben und Senken einer Traglast aufweist.

Lastmeßeinrichtungen für Hebezeuge sind bekannt. So ist beispielsweise in der DE 28 23 401 A1 eine Lastmeßeinrichtung für ein Hebezeug mit einem Hubwerksmotor beschrieben, die im Tragmittel angeordnet ist und mittels eines Zugmeßstabes die Erfassung der Traglast ermöglicht. Der Zugmeßstab weist einen Dehnungsmeßstreifen auf, dessen elektrischer Widerstand sich in Abhängigkeit von der am Hubwerk angreifenden Traglast ändert, so daß durch Erfassung des Widerstands des Dehnungsmeßstreifens oder eines Spannungsabfalls am Dehnungsmeßstreifen bei konstantem Stromfluß ein zur Traglast proportionales elektrisches Signal erzeugt wird. Dabei ermöglicht eine spezielle Brückenschaltung von Dehnungsmeßstreifen und Widerständen eine sehr genaue Bestimmung der Traglast. Somit ist es mit einer solchen Lastmeßeinrichtung möglich, die Belastung des Hubwerks ständig zu kontrollieren und das Hubwerk vor Überlastung zu schützen, indem an die Lastmeßeinrichtung elektronische Warneinrichtungen angeschlossen werden, die bei Überschreiten der Nenntraglast das Hubwerk selbsttätig abschalten.

Die DE 40 38 981 A1 offenbart einen Hubwerksantrieb mit einem Asynchronmotor, einem den Motor mit Wechselstrom änderbarer Frequenz speisenden Frequenzumrichter und einer die Frequenz des Frequenzumrichters auf einen insbesondere stufenlos wählbaren Frequenz-Sollwert einstellenden Steuerschaltung. Die Steuerschaltung umfasst eine Ermittlungseinrichtung, die einen ein Maß für das momentane Drehmoment des Motors repräsentierenden Belastungswert ermittelt, sowie einen Datenspeicher, der Daten für eine Grenzkennlinie speichert, die den Zusammenhang zwischen maximal zulässigen Frequenzen des Wechselstromes einerseits und Belastungswerte für eine vorgegebene Leistung des Motors andererseits repräsentiert. Die Steuerschaltung stellt die Frequenz des Frequenzumrichters auf einen abhängig von dem ermittelnden Belastungswert entsprechend den im Datenspeicher gespeicherten Daten sich ergebenden Frequenzwert ein und führt diesen bei einer Änderung des Belastungswertes nach.

Nachteilig ist bei dieser Lastmeßeinrichtung, daß die Anordnung der Meßelemente in den tragenden Teilen des Hubwerks oder Krans u. dgl. erfolgt, was aufwendig ist und spezielle Anpassungen im konstruktiven Aufbau insbesondere der tragenden Teile erfordert. Die Nachrüstung bereits in Betrieb befindlicher Hubwerke ist aufgrund der erforderlichen Umbaumaßnahmen relativ teuer und aufwendig.

Lastmeßeinrichtungen dienen darüber hinaus zur Erfassung von Belastungskennwerten von Hubwerken, indem schädigungsäquivalente Belastungswerte anhand der gemessenen Traglasten unter Berücksichtigung der Belastungszeit ermittelt und aufsummiert werden. So ist aus der DE-GM 2°95 03 416 U1 ein Gerät zur Ermittlung der dynamischen Beanspruchung von Bauteilen, Anlagen und Maschinen bekannt, bei der zur Überwachung der Anlagenbeanspruchung Belastungswerte über mehrere Lastwechsel gebildet und aufsummiert in einem Speicher abgelegt werden. Die Überschreitung des aufsummierten Gesamtbelastungswertes wird durch Auslösung eines entsprechenden Alarmsignals angezeigt; auf diese Weise ist es möglich, eine Regenerierung und/oder einen Austausch des Hubwerks beispielsweise entsprechend den einschlägigen gesetzlichen Vorschriften weder zu früh noch zu spät durchzuführen und damit das Hubwerk hinsichtlich der Lebensdauer optimal zu nutzen. Nachteilig ist auch hier der relativ große Aufwand, der zur Erfassung der Gesamtbelastung und zur Überwachung eines vorgegebenen Lebensdauergrenzwertes erforderlich ist.

Die einfachste Methode, die aufsummierten Belastungswerte eines Hubwerks zu ermitteln, besteht bekanntermaßen darin, einen Betriebsstundenzähler beispielsweise in die Netzzuleitung des Hubmotors einzuschalten. Diese sehr einfache Methode hat allerdings einen entscheidenden Nachteil: Die Dauerbeanspruchung des Hubwerks wird nur sehr grob ermittelt; die große Ungenauigkeit bei einer derartigen Erfassung der Gesamtbelastung muß durch entsprechend groß gewählte Sicherheitsfaktoren berücksichtigt werden. Wird das Hubwerk relativ häufig im unteren Teillastbereich betrieben, erfolgt eine Regenerierung oder ein Auswechseln des Hubwerks regelmäßig zu früh, d.h. die an sich mögliche Lebensdauer des Hubwerks kann unter Berücksichtigung der einschlägigen Vorschriften aus Sicherheitsgründen nicht voll genutzt werden, was regelmäßig mit beträchtlichen Kosten verbunden ist.

Die Aufgabe der Erfindung ist es daher, eine Einrichtung zur Erfassung der momentanen Belastung und/oder der Dauerbeanspruchung von Fördermitteln für Hubwerke zu schaffen, die keine Veränderungen oder Einbauten in tragende Teile eines Hubwerkes oder Tragwerkes erfordern und trotzdem eine sehr genaue Messung ermöglichen. Außerdem soll es diese Erfassungseinrichtung ermöglichen, die aufsummierte Dauerbeanspruchung des Hubwerks mit ausreichender Genauigkeit auf technisch sehr einfache Art und Weise zu bestimmen.

Die Lösung dieser Aufgabe ist erfindungsgemäß gekennzeichnet durch die im Patentanspruch 1 angegebenen Merkmale. Durch die kennzeichnenden Merkmale der Unteransprüche 2 bis 13 ist die Einrichtung in vorteilhafter Weise weiter ausgestaltet.

Die Erfindung sieht vor, daß der Elektromotor als Drehstromasynchronmotor ausgebildet ist, durch die Lastmeßeinrichtung die Wirkleistungsaufnahme des Drehstromasynchronmotors anhand einer Strom- und Spannungsmessung erfaßbar und mit einer Bezugsleistung vergleichbar ist zur Ermittlung der momentanen Belastung, wobei die Bezugsleistung eine rechnerisch bestimmte Leistung des Drehstromasynchronmotors für das Treiben einer Nenntraglast des Fördermittels ist.

Die erfindungsgemäße Lösung ermöglicht es, ohne Veränderungen oder Einbauten in tragende Teile des Fördermittels die momentane Belastung als auch die Dauerbeanspruchung mit hoher Genauigkeit insbesondere im Bereich der Nenntraglast zu bestimmen. So ist es beispielsweise möglich, über die Wirkleistungsaufnahme des Drehstromasynchronmotors die Belastung, insbesondere wenn diese im Bereich der Nenntraglast liegt, mit einem Meßfehler von 1 bis 2 % zu bestimmen. Bei Einsatz der Erfassungseinrichtung als Belastungskontrolle zum Schutz des Fördermittels gewährleistet die erfindungsgemäße Lösung ein einwandfreies Erkennen von Überlast.

Die Erfassung der Dauerbeanspruchung des Fördermittels ist mit der erfindungsgemäßen Lösung ebenfalls mit geringem Aufwand möglich. Der etwas größere Meßfehler im Teillastbereich ist für die Erfassung der Dauerbeanspruchung über einen langen Zeitraum von untergeordneter Bedeutung, insbesondere da bei der Dauerbeanspruchung das Verhältnis von Teiltraglast zu Nenntraglast mit der dritten Potenz in die Dauerbeanspruchung des Fördermittels eingeht, entsprechend den einschlägigen Vorschriften zur Bestimmung des Lebensdauergrenzwertes von Fördermitteln. Die erfindungsgemäße Einrichtung gewährleistet folglich die erforderliche hohe Meßgenauigkeit, die für eine hinreichend genaue Bestimmung der Dauerbeanspruchung des Fördermittels notwendig ist.

Zur einfachen Kontrolle der momentanen Belastung durch eine Bedienperson wird vorgeschlagen, daß die momentane Belastung als das Verhältnis oder der Differenz aus der Wirkleistungsaufnahme und der Bezugsleistung gebildet ist und daß eine Anzeigeeinrichtung zur Anzeige der momentanen Belastung als Belastungskontrolle vorgesehen ist.

Zum selbsttätigen Schutz des Fördermittels ist eine Abschalteinrichtung vorgesehen zur Unterbrechung der Hubbewegung durch Abschalten des Motors, wenn die momentane Belastung eine vorgegebene Belastung überschreitet, wobei diese innerhalb der zulässigen Belastungswerte liegen muß.

Zur Erfassung der Dauerbeanspruchung des Fördermittels wird vorgeschlagen, daß die momentane Belastung als momentane Beanspruchung des Fördermittels über der Zeit integrierbar und in einer vorgesehenen Speichereinheit ablegbar und mittels einer Belastungsanzeigeeinrichtung anzeigbar ist. Auf diese Weise ist es mit einfachen Mitteln möglich, die wirkliche Dauerbeanspruchung des Fördermittels korrekt zu erfassen.

Zweckmäßigerweise ist die Bezugsleistung B für das vertikale Heben aus dem Antriebsmoment des Drehstromasynchronmotors für die Nenntraglast und der synchronen Drehfrequenz durch folgende Formel bestimmt:

$$B = (m \cdot g \cdot R_{TR}) / (\eta \cdot i \cdot z) \cdot 2\pi \cdot f/p,$$

wobei
m = Traglast
g = Erdbeschleunigung
$R_{TR}$ = Trommelradius
f = Netzfrequenz
i = Getriebeübersetzung
z = Einscherung
p = Polpaarzahl des Asynchronmotors
η = Getriebwirkungsgrad
bedeuten.

Es hat sich als vorteilhaft herausgestellt, als Bezugsleistung des Fördermittels eine aus den konstruktiven Parametem des Fördermittels berechnete Leistungsgröße zu verwenden, so daß aufwendige und häufig zu wiederholende Eichmessungen entfallen können.

Um die Genauigkeit der Erfassung der Dauerbeanspruchung und/oder der momentanen Belastung durch Vergleich der Wirkleistungsaufnahme mit der Bezugsleistung zu verbessern, wird vorgeschlagen, daß die gemessene Wirkleistungsaufnahme um die Stromwärmeverluste der Ständerwicklung des Motors vermindert ist, da diese keinen Beitrag zur Hubarbeit des Fördermittels leisten.

Mit geringem Aufwand erhält man die Stromwärmeverluste der Ständerwicklung des Motors, wenn man die Stromwärmeverluste aus dem gemessenen Strom und dem elektrischen Widerstand der Ständerwicklung des Motors bestimmt.

Die Genauigkeit der Erfassung der Stromwärmeverluste läßt sich verbessern, wenn die Temperatur der Ständerwicklung meßbar und der elektrische Widerstand der Ständerwicklung aus deren Kaltwiderstand berechnet wird.

Die Genauigkeit der Erfassung der Dauerbeanspruchung und/oder der momentanen Belastung wird dadurch weiter verbessert, daß die gemessene Wirkleistungsaufnahme um die Leerlaufverluste des Fördermittels (um einen entsprechenden Offset also) vermindert ist, da auch diese keinen Beitrag zur Hubarbeit des Fördermittels leisten; die Leerlaufverluste können durch Messung der Leistungsaufnahme des Fördermittels ohne Last bestimmt werden.

Vorteilhafterweise erfolgt das Umschalten der Drehrichtung des Drehstromasynchronmotors dadurch, daß ein Wendeschalter für ein Wenden der Motorphasenzuleitungen vorgesehen ist.

Die Strommessung zur Bestimmung der Wirkleistungsaufnahme des Drehstromasynchronmotors erfolgt dadurch, daß ein Stromwandler vorgesehen ist, der den Strom in einer der für einen Drehrichtungswechsel gewendeten Motorphasenzuleitung erfaßt. Das hat den Vorteil, daß die sich unterscheidenden Phasenfolgen zwischen dem gemessenen Strom und der gemessenen Spannung bei "Heben der Last" und bei "Senken der Last" unterscheidbar sind, so daß die Erfassung der Dauerbeanspruchung und/oder der momentanen Belastung anhand der Wirkleistungsaufnahme nur beim hierfür relevanten Zustand "Heben der Last" erfolgt.

Mit der Erfindung wird vorgeschlagen, daß die Spannungsmessung zwischen der Motorphasenzuleitung, deren Strom erfaßt ist, und einer der beiden anderen Motorphasenzuleitungen erfolgt. Der Vorteil dieser Meßweise besteht darin, daß Spannung und Strom nur dann gleichzeitig gemessen werden können, wenn der Zustand "Heben der Last" eingeschaltet ist.

Die Unterscheidbarkeit der Wirkleistungsaufnahme hinsichtlich der beiden Zustände "Heben der Last" und "Senken der Last" wird dadurch gewährleistet, daß die Spannungsmessung zwischen der Motorphasenzuleitung, deren Strom erfaßt ist, und den beiden übrigen Motorphasenzuleitungen erfolgt, und zwar so, daß die Spannungsmessung der nicht gewendeten Motorphasenzuleitung vor dem Wendeschalter und die der gewendeten Motorphasenzuleitung hinter dem Wendeschalter gegenüber dem Potential der Motorphasenzuleitung erfolgt, deren Strom erfaßt ist.

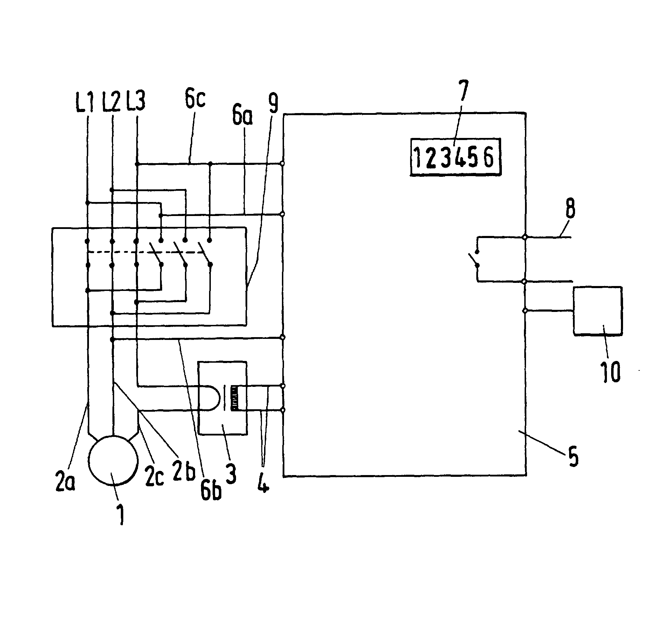

Ein Ausführungsbeispiel der Erfindung ist schematisch in der einzigen Figur dargestellt, die eine Einrichtung zur Erfassung der momentanen Belastung und/oder der Dauerbeanspruchung eines Hubwerks mit einem Drehstromasynchronmotor als Antriebsmittel zeigt.

In der Figur ist eine Einrichtung zur Erfassung der Dauerbeanspruchung und/oder der momentanen Belastung eines Drehstromasynchronmotors 1 als Antriebsmittel eines Hubwerks dargestellt. Der Drehstromasynchronmotor 1 ist als Kurzschlußläufer ausgebildet und über Motorphasenzuleitungen 2a, 2b, 2c an Drehstromnetzphasen L1, L2, L3 eines Drehstromnetzes angeschlossen. Die Motorphasenzuleitung 2c wird über einen Stromwandler 3 geführt, durch den der Ständerstrom des Asynchronmotors 1 meßbar ist. Der Stromwandler 3 erzeugt eine dem Ständerstrom proportionale Spannung; über Leitungen 4 ist der Ausgang des Stromwandlers 3 mit einer Auswerteeinheit 5 verbunden. Zusätzlich sind die Motorphasenzuleitungen 2a, 2b, 2c über Zuleitungen 6a, 6b, 6c mit der Auswerteeinheit 5 verbunden. In der Auswerteeinheit 5 erfolgt die Bestimmung der Wirkleistungsaufnahme des Drehstromasynchronmotors 1 anhand der in der Auswerteeinheit 5 gemessenen Spannungs- und Stromwerte des Drehstromasynchronmotors 1 in an sich bekannter Art und Weise, allerdings von der Auswerteeinheit 5 gesteuert nur im Zustand "Heben der Last", da nur in diesem Zustand ein eindeutiger Zusammenhang zwischen der Wirkleistungsaufnahme und einer berechenbaren Bezugsleistung des Hubwerks existiert.

Die ermittelte Wirkleistungsaufnahme wird in der Auswerteeinheit 5 um einen Offset verringert, der die Leerlaufverluste des Hubwerks berücksichtigt, die sich im wesentlichen aus Ummagnetisierungsverlusten der Magnetbleche und den Reibungsverlusten des Motorläufers des Drehstromasynchronmotors 1 zusammensetzt. Der Wert dieser Verluste ist dabei mittels einer Leistungsmessung des im Leerlauf betriebenen Drehstromasynchronmotors 1 leicht ermittelbar oder anhand der Konstruktionsdaten berechenbar und in der Auswerteeinheit 5 in einem Speicherelement abgelegt.

Ferner wird die Wirkleistungsaufnahme jeweils um den Anteil der Stromwärmeverluste der Motorständerwicklung korrigiert, wobei die Stromwärmeverluste aus dem gemessenen Strom und dem elektrischen Widerstand der Ständerwicklung des Drehstromasynchronmotors 1 berechnet sind. Als elektrischer Widerstandswert der Ständerwicklung wird deren Kaltwiderstand verwendet, der aus den Wicklungsdaten des Drehstromasynchronmotors 1 berechenbar ist. Zusätzlich ist es selbstverständlich möglich, die Temperaturabhängigkeit des elektrischen Widerstandswertes der Ständerwicklung durch Erfassung der Wicklungstemperatur zu berücksichtigen, indem zum Kaltwiderstand ein entsprechender Korrekturwert (positiv oder negativ) addiert wird. Der elektrische Widerstandswert der Ständerwicklung ist ebenfalls in einem Speicherelement der Auswerteeinheit 5 abgelegt.

Die Auswerteeinheit 5 ermittelt die momentane Belastung des Hubwerks anhand der Bezugsleistung und zeigt die Differenz oder das Verhältnis aus gemessener Wirkleistungsaufnahme und Bezugsleistung an; hierbei ist der Nenntraglast die korrespondierende Bezugsleistung B durch die folgende Formel zugeordnet:

$$B = (m \cdot g \cdot R_{TR}) / (\eta \cdot i \cdot z) \cdot 2\pi \cdot f/p,$$

wobei m die Nenntraglast, g die Erdbeschleunigung, $R_{TR}$ der Trommelradius der Windentrommel, f die Netzfrequenz, i die Getriebeübersetzung des verwendeten Getriebes, z die Einscherung des Seils, p die Polpaarzahl des Drehstromasynchronmotors 1 und η der Getriebwirkungsgrad ist. Die Bezugsleistung wird also allein aus den Konstruktionsdaten des Hubwerks berechnet.

Die Bezugsleistung ist der Anteil der Leistung, die der Drehstromasynchronmotor 1 aus dem Drehstromnetz entnimmt und über den Motorspalt überträgt, um das Moment zu erzeugen, das der Drehstromasynchronmotor 1 für das Heben der Nenntraglast bei konstanter Hubgeschwindigkeit über die Antriebswelle überträgt.

Die Bezugsleistung ist berechnet aus der Drehfeldleistung des Drehstromasynchronmotors 1 bei Nenntraglast und ergibt sich aus der Drehfrequenz, mit der das Magnetfeld des Ständers im Luftspalt zwischen Ständer und Läufer des Drehstromasynchronmotors 1 umläuft, und dem abgegebenen Moment. Aufgrund der magnetischen Kraftübertragung über den Luftspalt sind die Drehfeldleistung und das abgegebene Moment direkt proportional, d.h. die Bezugsleistung ist ein Maß für den lastabhängigen Anteil der Leistung, die für das Heben der Nenntraglast über den Luftspalt des Motors auf den Läufer übertragen werden muß. Somit kann die Belastung des Hubwerks durch eine momentane Traglast eindeutig durch Vergleich der ständerseitig gemessenen Wirkleistungsaufnahme des Drehstromasynchronmotors 1 (des Ständers) mit der so berechneten Bezugsleistung ermittelt werden.

Die Differenz oder das Verhältnis dieser beiden Leistungen, die gleich der Differenz bzw. dem Verhältnis aus momentaner Traglast und Nenntraglast ist, ist durch eine in der Auswerteeinheit 5 integrierten Anzeigeeinrichtung 10 als momentane Belastung anzeigbar, die einer Bedienperson als Belastungskontrolle dient. Zusätzlich ist eine Steuerleitung 8 vorgesehen, die mit einem Schalter verbunden ist (schematisch in der Figur dargestellt), über das die Stromzuführung des Drehstromasynchronmotors 1 unterbrochen wird, wenn die momentane Belastung die vorgegebene zulässige Belastung überschreitet. Die Steuerleitung 8 ist nur aktivierbar, wenn sich das Hubwerk im Zustand "Heben der Last" befindet.

Um mit dem Hubwerk eine Traglast wahlweise Heben oder Senken zu können, sind mittels eines Wendeschalters 9 zwei Motorphasenzuleitungen 2b, 2c der drei Motorphasenzuleitungen 2,a 2b, 2c hinsichtlich ihrer Verbindung mit den Drehstromnetzphasen L1, L2, L3 vertauschbar. Wie aus der Figur hervorgeht, ist der Stromwandler 3 so angeordnet, daß er den Strom jeweils in einer der beiden gewendeten Motorphasenzuleitungen 2b oder 2c erfaßt. Für die Spannungsmessung sind die Motorphasenzuleitungen 2b, 2c über Leitungen 6b, 6c mit der in der Auswerteeinheit 5 vorgesehenen Spannungsmeßeinrichtung verbunden, so daß jeweils die Spannung zwischen dem Potential der Motorphasenzuleitung 2b oder 2c und der anderen Motorphasenzuleitung 2c bzw. 2b meßbar ist.

An sich könnten dann Spannung und Strom nur gleichzeitig gemessen werden, wenn der Zustand "Heben der Last" eingeschaltet ist. Deshalb ist die Leitung 6c zur Auswerteeinheit 5 vorgesehen, die sicherstellt, daß die Spannungsmessung zwischen der Motorphasenzuleitung 2c, deren Strom erfaßt ist, und den beiden übrigen Motorphasenzuleitungen 2a, 2b meßbar ist. Hierbei erfolgt die Spannungsmessung der nicht gewendeten Motorphasenzuleitung 2a vor dem Wendeschalter 9 und die der wendbaren Motorphasenzuleitung 2c oder 2b hinter dem Wendeschalter 9 bezogen auf das Potential der Motorphasenzuleitung 2a. Beide Zustände sind dadurch in der Auswerteeinheit 5 unterscheidbar, so daß nur beim Heben der Traglast Strom und Spannung gemessen und daraus die für die momentane Belastung relevante, der Bezugsleistung entsprechende Wirkleistungsaufnahme des Drehstromasynchronmotors 1 bestimmt wird. Nur diese Wirkleistungsaufnahme wird im Ausführungsbeispiel für die Bestimmung der momentanen Belastung verwendet, da nur diese Wirkleistungsaufnahme proportional zur momentanen Belastung ist. Die Auswerteeinheit 5 kann aufgrund der gewählten Beschaltung einwandfrei feststellen, ob das Hubwerk sich im Zustand "Heben der Last" oder "Senken der Last" befindet, und somit die für die Erfassung der momentanen Belastung und/oder der Dauerbeanspruchung relevante Wirkleistung ermitteln. Der günstigste Erfassungszeitpunkt ist der, bei dem die Traglast mit konstanter Hubgeschwindigkeit gehoben wird; die Erfassung erfolgt deshalb im Ausführungsbeispiel immer mit einer kurzen zeitlichen Verzögerung, also nach Beendigung des Anfahrvorgangs, also nach der Anlaufphase.

In der Auswerteeinheit 5 ist die momentane Belastung als momentane Beanspruchung des Fördermittels über der Zeit integrierbar und in einer vorgesehenen Speichereinheit ablegbar; die aufsummierte Dauerbeanspruchung, das ist der in der Speichereinheit abgelegte integrale Wert, ist durch die Belastungsanzeigeeinrichtung 7 anzeigbar. Insbesondere ist es auch möglich, bei der Bestimmung Dauerbeanspruchung das Verhältnis von Teiltraglast zu Nenntraglast mit der dritten Potenz in die Dauerbeanspruchung des Fördermittels einfließen zu lassen.

Die Anschlüsse für die Spannungsmessung dienen gleichzeitig der Spannungsversorgung der Auswerteeinheit 5.

## Patentansprüche

1. Einrichtung zur Erfassung der momentanen Belastung und/oder der Dauerbeanspruchung von Fördermitteln, insbesondere Hubwerken, die eine Lastmesseinrichtung umfasst und einen Elektromotor (1) als Antriebsmittel für das Heben und Senken einer Traglast aufweist,
   wobei der Elektromotor als Drehstromasynchronmotor (1) ausgebildet ist, wobei durch die Lastmesseinrichtung die Wirkleistungsaufnahme des Drehstromasynchronmotors (1) anhand einer Strom- und Spannungsmessung erfassbar und mit einer Bezugsleistung vergleichbar ist zur Ermittlung der momentanen Belastung, wobei die Bezugsleistung eine rechnerisch bestimmte Leistung des Drehstromasynchronmotors (1) für das Treiben einer Nenntraglast des Fördermittels ist
   **dadurch gekennzeichnet,**
   **dass** die gemessene Wirkleistungsaufnahme um die Stromwärmeverluste der Motorständerwicklung vermindert ist.

2. Einrichtung nach Anspruch 1,
   **dadurch gekennzeichnet,**
   **dass** die momentane Belastung als das Verhältnis oder der Differenz aus der Wirkleistungsaufnahme und der Bezugsleistung gebildet und dass eine Anzeigeeinrichtung (10) zur Anzeige der momentanen Belastung als Belastungskontrolle vorgesehen ist.

3. Einrichtung nach Anspruch 1 oder 2,
   **dadurch gekennzeichnet,**
   **dass** eine Abschalteinrichtung vorgesehen ist zur Unterbrechung der Hubbewegung durch Abschalten des Drehstromasynchronmotors (1), wenn die momentane Belastung eine vorgegebene Belastung überschreitet.

4. Einrichtung nach einem der Ansprüche 1 bis 3,
   **dadurch gekennzeichnet,**
   **dass** die momentane Belastung als momentane Beanspruchung des Fördermittels über der Zeit integrierbar und in einer vorgesehenen Speichereinheit als Dauerbeanspruchung ablegbar und mittels einer Belastungsanzeigeeinrichtung (7) anzeigbar ist.

5. Einrichtung nach einem der Ansprüche 1 bis 4,
   **dadurch gekennzeichnet,**
   **dass** die Bezugsleistung für das vertikale Heben aus dem Antriebsmoment des Drehstromasynchronmotors (1) für die Nenntraglast und der synchronen Drehfrequenz durch folgende Formel bestimmt ist:

$$B = (m \cdot g \cdot R_{TR}) / (\eta \cdot i \cdot z) \cdot 2\pi \cdot f/p,$$

   wobei
   m = Last
   g = Erdbeschleunigung
   $R_{TR}$= Trommelradius
   f = Netzfrequenz
   i = Getriebeübersetzung
   z = Einscherung
   p = Polpaarzahl
   η = Getriebwirkungsgrad
   bedeuten.

6. Einrichtung nach Anspruch 1,
   **dadurch gekennzeichnet,**
   **dass** die Stromwärmeverluste aus dem gemessenen Strom und dem elektrischen Widerstand der Ständerwicklung des Drehstromasynchronmotors (1) bestimmt sind.

7. Einrichtung nach Anspruch 6,
   **dadurch gekennzeichnet,**
   **dass** die Temperatur der Ständerwicklung messbar und der elektrische Widerstand der Ständerwicklung aus deren Kaltwiderstand berechnet ist.

8. Einrichtung nach einem der Ansprüche 1 bis 7,
   **dadurch gekennzeichnet,**
   **dass** die gemessene Wirkleistungsaufnahme um einen Offset für die Leerlaufverluste des Fördermittels vermindert ist.

9. Einrichtung nach einem der Ansprüche 1 bis 8,
   **dadurch gekennzeichnet,**
   **dass** ein Wendeschalter (9) für ein Wenden der Motorphasenzuleitungen (2b, 2c) zum Umschalten der Drehrichtung des Drehstromasynchronmotors (1) vorgesehen ist.

10. Einrichtung nach einem der Ansprüche 1 bis 9,
    **dadurch gekennzeichnet,**
    **dass** für die Messung der Wirkleistungsaufnahme des Drehstromasynchronmotors (1) ein Stromwandler (3) vorgesehen ist, der den Strom in einer der für einen Drehrichtungswechsel gewendeten Motorphasenzuleitung (2b oder 2c) erfasst.

11. Einrichtung nach einem der Ansprüche 1 bis 10,
    **dadurch gekennzeichnet,**
    **dass** die Spannungsmessung zwischen der Motorphasenzuleitung (2b oder 2c), deren Strom erfasst ist, und einer der beiden anderen Motorphasenzuleitungen (2a oder 2c oder 2b) erfolgt.

12. Einrichtung nach einem der Ansprüche 1 bis 11,
    **dadurch gekennzeichnet,**
    **dass** die Spannungsmessung zwischen der Motorphasenzuleitung (2c), deren Strom erfasst ist, und den beiden übrigen Motorphasenzuleitungen (2a, 2b) messbar ist, wobei die Spannungsmessung der nicht gewendeten Motorphasenzuleitung (2a) vor dem Wendeschalter (9) und die der gewendeten Motorphasenzuleitung (2c oder 2b) hinter dem Wendeschalter (9) gegenüber dem Potential der Motorphasenzuleitung (2a) erfolgt.

**Claims**

1. Apparatus for determining the instantaneous load and/or the continuous stress on conveying means, particularly lifting mechanisms, comprising a load measuring device and an electric motor (1) as drive means for lifting and lowering a load, wherein the electric motor is constructed as a three-phase induction motor (1) and wherein the effective power consumption of the three-phase induction motor (1) can be detected by the load measuring device based on a current and voltage measurement and can be compared with a reference power in order to determine the instantaneous load, the reference power being a power of the three-phase induction motor (1) which is determined by computation for driving a nominal load of the conveying means, **characterised in that** the measured effective power consumption is reduced by the current heat losses of the motor stator winding.

**2.** Apparatus as claimed in Claim 1, **characterised in that** the instantaneous load is formed as the ratio or the difference between the effective power consumption and the reference power, and that a display device (10) is provided as load-monitoring device for display of the instantaneous load.

**3.** Apparatus as claimed in Claim **1** or 2, **characterised in that** a switch-off device is provided for interrupting the lifting movement by switching off the three-phase induction motor (1) when the instantaneous load exceeds a predetermined load.

**4.** Apparatus as claimed in any one of Claims 1 to 3, **characterised in that** the instantaneous load can be integrated over time as instantaneous stress on the conveying means, can be stored as continuous stress in a memory device provided and can be displayed by means of a load display device (7).

**5.** Apparatus as claimed in any one of Claims 1 to 4, **characterised in that** the reference power for vertical lifting is determined from the driving torque of the three-phase induction motor (1) for the nominal load and from the synchronous rotary frequency using the following formula:

$$B = (m \cdot g \cdot R_{TR}) \, / \, (\eta \cdot i \cdot z) \cdot 2\pi \cdot f/p,$$

where
m = load
g = acceleration due to gravity
$R_{TR}$ = drum radius
f = power supply frequency to the induction motor
i = gear ratio
z = shear load
p = number of pole pairs
$\eta$ = transmission efficiency.

**6.** Apparatus as claimed in Claim 1, **characterised in that** the current heat losses are determined from the measured current and the electrical resistance of the stator winding of the three-phase induction motor (1).

**7.** Apparatus as claimed in Claim 6, **characterised in that** the temperature of the stator winding can be measured and the electrical resistance of the stator winding is calculated from the cold resistance thereof.

**8.** Apparatus as claimed in any one of Claims 1 to 7. **characterised in that** the measured effective power consumption is reduced by an offset for the no-load losses of the conveying means.

**9.** Apparatus as claimed in any one of Claims 1 to 8, **characterised in that** a reversing switch (9) for reversing the motor phase leads (2b, 2c) is provided for reversing the direction of rotation of the three-phase induction motor (1).

**10.** Apparatus as claimed in any one of Claims 1 to 9, **characterised in that** for the measurement of the effective power consumption of the three-phase induction motor (1) a current transformer (3) is provided which detects the current in a motor phase lead (2b or 2c) which is reversed in order to change the direction of rotation.

**11.** Apparatus as claimed in any one of Claims 1 to 10, **characterised in that** the voltage measurement takes place between the motor phase lead (2b or 2c) of which the current is detected and one of the two other motor phase leads (2a or 2c or 2b).

**12.** Apparatus as claimed in any one of Claims 1 to 11, **characterised in that** the voltage measurement is carried out between the motor phase lead (2c) of which the current is detected and the two other motor phase leads (2a, 2b), whereby the voltage measurement of the motor phase lead (2a) which is not reversed takes place upstream of the reversing switch (9) and the voltage measurement of the reversed motor phase lead (2c or 2b) takes place downstream of the reversing switch (9) relative to the potential of the motor phase lead (2a).

## Revendications

**1.** Dispositif de mesure de la contrainte instantanée et/ou de la sollicitation de fatigue de moyens de manipulation, en particulier de treuils de levage, qui comporte un dispositif de mesure de charge et un moteur électrique (1) servant de moyens d'entraînement pour lever et abaisser une charge,
le moteur électrique étant conformé en moteur asynchrone triphasé, le dispositif de mesure de charge permettant de mesurer l'absorption de puissance active par le moteur asynchrone triphasé (1) par une mesure du courant et de la tension et de la comparer à une puissance de référence pour déterminer la contrainte instantanée, la puissance de référence étant une puissance calculée du moteur asynchrone triphasé pour entraîner une charge nominale du moyen de déplacement,
**caractérisé en ce que** l'absorption de puissance active mesurée est réduite des pertes par effet Joule dans l'enroulement du stator du moteur.

**2.** Dispositif selon la revendication 1, **caractérisé en**

**ce que** la contrainte instantanée est formée par le rapport ou la différence entre l'absorption de puissance active et la puissance de référence et **en ce qu'**il est prévu un dispositif de présentation (10) destiné à présenter la contrainte instantanée sous la forme d'un contrôle de contrainte.

**3.** Dispositif selon la revendication 1 ou 2, **caractérisé en ce qu'**il est prévu un dispositif d'arrêt destiné à interrompre le mouvement de levage en arrêtant le moteur asynchrone triphasé lorsque la contrainte instantanée devient supérieure à une contrainte prédéterminée.

**4.** Dispositif selon l'une des revendications 1 à 3, **caractérisé en ce que** la contrainte instantanée peut être intégrée dans le temps sous la forme d'une sollicitation instantanée du moyen de manipulation et peut être stockée dans une unité de mémoire prévue sous la forme de sollicitation de fatigue et être présentée au moyen d'un dispositif de présentation de contrainte (7).

**5.** Dispositif selon l'une des revendications 1 à 4, **caractérisé en ce que** la puissance de référence pour le levage vertical est déterminée à partir du couple d'entraînement du moteur asynchrone triphasé (1) pour la charge nominale et de la fréquence de rotation synchrone conformément à la suite formule suivante :

$$B = (m*g*R_{TR})/(\eta*i*z)*2\pi*f/p$$

où
m = charge
g = gravitation
$R_{TR}$ = rayon du treuil
f = fréquence du réseau
i = démultiplication du réducteur
z = mouflage
p = nombre de paires de pôles
η = rendement du réducteur

**6.** Dispositif selon la revendication 1, **caractérisé en ce que** les pertes par effet Joule sont déterminées à partir du courant mesuré et de la résistance électrique de l'enroulement du stator du moteur asynchrone triphasé (1).

**7.** Dispositif selon la revendication 6, **caractérisé en ce que** la température de l'enroulement du stator peut être mesurée et la résistance électrique de l'enroulement du stator est calculée à partir de sa résistance à froid.

**8.** Dispositif selon l'une des revendications 1 à 7, **caractérisé en ce que** l'absorption de puissance active mesurée est réduite d'un décalage dû aux pertes de fonctionnement à vide du moyen de manipulation.

**9.** Dispositif selon l'une des revendications 1 à 8, **caractérisé en ce qu'**il est prévu un inverseur de marche (9) destiné à inverser les lignes de phase de moteur (2b, 2c) pour changer le sens de rotation du moteur asynchrone triphasé (1).

**10.** Dispositif selon l'une des revendications 1 à 9, **caractérisé en ce qu'**il est prévu un transformateur de courant pour la mesure de l'absorption de puissance active du moteur asynchrone triphasé (1), le transformateur de courant mesurant le courant dans une ligne de phase de moteur (2b ou 2c) inversée afin d'effectuer un changement de sens de rotation.

**11.** Dispositif selon l'une des revendications 1 à 10, **caractérisé en ce que** la mesure de la tension est effectuée entre la ligne de phase de moteur (2b ou 2c), dont le courant est mesuré, et l'une des deux autres lignes de phase de moteur (2a ou 2c ou 2b).

**12.** Dispositif selon l'une des revendications 1 à 11, **caractérisé en ce que** la mesure de la tension est effectuée entre la ligne de phase de moteur (2c), dont le courant est mesuré, et les deux autres lignes de phase de moteur (2a, 2b), la mesure de la tension de la ligne de phase de moteur non inversée (2a) étant effectuée en avant de l'inverseur de marche (9) et celle de la ligne de phase de moteur (2c ou 2b) est effectué en arrière de l'inverseur de marche (9) par référence au potentiel de la ligne de phase de moteur (2a).